# Europäisches Patentamt
## European Patent Office
### Office européen des brevets

(19)

(11) Veröffentlichungsnummer: **0 296 267 B1**

(12) # EUROPÄISCHE PATENTSCHRIFT

(45) Veröffentlichungstag der Patentschrift: **09.10.91**

(51) Int. Cl.⁵: **A47C 27/14**, A61G 7/047

(21) Anmeldenummer: **87109076.7**

(22) Anmeldetag: **24.06.87**

(54) Gebrauchsartikel, wie z.B. Polster, Decken, Schutzbekleidung und dergleichen, mit elastischer Füllung, sowie Verfahren zu dessen Herstellung.

(43) Veröffentlichungstag der Anmeldung:
**28.12.88 Patentblatt 88/52**

(45) Bekanntmachung des Hinweises auf die Patenterteilung:
**09.10.91 Patentblatt 91/41**

(84) Benannte Vertragsstaaten:
**AT BE CH DE ES FR GB GR IT LI LU NL SE**

(56) Entgegenhaltungen:
**FR-A- 1 287 757**
**GB-A- 954 509**
**GB-A- 1 163 928**
**GB-A- 1 314 194**
**US-A- 2 725 927**

(73) Patentinhaber: **INNOVATEXT Kutato és Fejlesztö Vállalat**
**Gyömröi ut 86**
**H-1103 Budapest(HU)**

(72) Erfinder: **Alpár, Béla, Dipl.-Ing.**
**Bart k Béla u. 54**
**H-1111 Budapest(HU)**
Erfinder: **Katona, Lajos**
**Kál czy u. 15**
**H-9026 Gy r(HU)**
Erfinder: **Paál, Erzsébet geb. Trangoni**
**Kéveköt u. 120**
**H-1173 Budapest(HU)**
Erfinder: **T th, Imre**
**Titán u. 4**
**H-1028 Budapest(HU)**
Erfinder: **Varga, Dezs**
**Gy ri u. 28**
**H-9111 Tény(HU)**

(74) Vertreter: **Kern, Wolfgang, Dipl.-Ing. et al**
**Patentanwälte Kern, Brehm und Partner**
**Albert-Rosshaupter-Strasse 73**
**W-8000 München 70(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Gebrauchsartikel, beispielsweise Polster, Decken, Schutzbekleidung u. dgl., mit elastischer Füllung, welcher Gebrauchsartikel waschbar und antiseptisch ist und aus einem Überzug und darin befindlichen Schaumstücken aus Polyurethan als Füllungsmaterial mit antiseptischen Eigenschaften besteht.

Des weiteren betrifft die Erfindung ein Verfahren zur Herstellung des Gebrauchsartikels, bei dem zur Herstellung des an sich bekannten Polyurethanschaumes der Polyolkomponente ein die enzymatische Abbildung hindernder Zusatzstoff beigemischt wird.

Es ist bekannt, für Therapiezwecke die verschiedensten Polster bzw. polsterartige therapeutische Hilfsmittel anzuwenden zu dem Zweck, dem Kranken Bequemlichkeit zu bieten, gleichzeitig aber auch dem Wundliegen vorzubeugen und seine Schmerzen zu mildern sowie die Heilarbeit zu erleichtern. Diese Polster können Kopfpolster, aber auch Liegepolster und Matratzen sein, wie sie in der GB-A-954 509 beschrieben sind, welche einen gattungsgemäßen Aufbau aufweisen, bei dem allerdings der die elastische Schaumstoffüllung aufnehmende Überzug mit Hilfe eines antiseptische Eigenschaften aufweisenden Klebstoffs an der Füllung angebracht ist, oder andere, sich den Formen des Körpers anpassende Polster, z.B,. Handunterstützungspolster sein. Eine wichtige Bedingung gegenüber diesen therapeutischen Hilfsmitteln ist, dass sie nicht nur leicht und elastisch, sondern gegen Bakterien und Schimmelpilzen auch widerstandsfähig und waschbar sein sollen. Bei Bettwäsche der Bevölkerung, der Hotels und Kollegien ist dieser Anspruch auch sehr wichtig.

Es sind Schutzbekleidungen bekannt, deren Hauptziel darin besteht, dass sie gegen die Umgebungstemperatur Schutz gewährleisten, gleichzeitig aber leicht, elastisch und waschbar sein und und antiseptische Eigenschaften aufweisen sollen. Derartige Schutzbekleidung wird von den Arbeitern in Kühlhäusern verwendet.

Die therapeutischen Hilfsmittel, bzw. gegebenenfalls die Schutzbekleidung werden eben deshalb mit verschiedenen Kunststoffschaum, z.B. im Falle von Polstern mit Polyurethanschaum gefüllt, so war es z.B. naheliegend, die Polster mit Polyurethanschaumabfällen zu füllen. Diese Füllungen haben aber mehrere Nachteile.

Ein wesentlicher Nachteil ist, dass diese Abfälle nicht polymerisierte, verbrannte Abfälle sind, die im Gebrauch leicht modern und darüber hinaus noch zur Aufnahme von Bakterien und zur Schimmelbildung neigen. Durch Waschen kommen diese Nachteile noch mehr zum Vorschein, so dass diese Artikel vorzeitig zugrundegehen. Das Waschen sichert ausserdem auch im Falle einer nachträglichen Desinfizierung die Bakterien- und Schimmellosigkeit nicht.

Ein weiterer, weniger bekannter Nachteil besteht darin, dass aus dem nicht völlig polymerisierten Schaum aus den darin verbliebenen Isozyanatresten auch schädliche Zyanverbindungen frei werden können, was das Zugrundegehen des Artikels beschleunigt.

Diese Nachteile versuchte man dadurch zu beseitigen, dass kein Polyurethanschaum, sondern ein Stoff mit einem spezifischen Gewicht von etwa 30 kg/m³ oder ein schwererer polymerisierter Stoff in rhomboidförmige Stücke geschnitten wurde und die verschiedenen Polsterüberzuge mit diesem Stoff gefüllt wurden. Die Stücke wurden vorher - zwecks leichter Zerkleinerung und Einfüllbarkeit antistatisch gemacht und die rhomboidförmigen Stücke wurden in den Polsterüberzügen mehr oder weniger regelmässig geordnet. Im Gebrauch ist diese regelmässige Verteilung meistens unregelmässig geworden.

Die Füllung der auf diese Weise hergestellten Polster neigte zwar nicht zum Modern oder zur Zerstückung, doch verschob sich die regelmässig geordnete Füllung im Gebrauch und während des mehrfachen Waschens, und so konnte eine geeignete gleichmässig elastische Oberfläche nicht dauernd aufrechterhalten werden. Andererseits waren die Polster nach dem Waschen, sogar auch infolge der Körperfeuchtigkeit schimmelfähig. Ausserdem hielten die Polster ohne Beschädigung nur eine Waschtemperatur von etwa maximum 60°C aus. Bei den für eine Schutzbekleidung angewendeten Schäumen entstanden ähnliche Probleme.

Die Aufgabe der Erfindung besteht deshalb darin, diese Nachteile zu beseitigen und den Gebrauchsartikel im Hinblick auf seine bakterien- und schimmelabweisenden Eigenschaften noch weiter zu verbessern, wobei die Möglichkeit gegeben sein soll, ihn den üblichen Waschprozessen zu unterwerfen und anschließend zu zentrifugieren und zu trocknen. Diese Aufgabe wird gemäß dem Kennzeichen des Anspruchs 1 gelöst. Die Lösung in verfahrenstechnischer Hinsicht wird durch den Anspruch 4 gekennzeichnet.

Die Erfindung beruht auf mehreren Erkenntnissen.

Vor allem wurde erkannt, dass die innere Bewegung der Füllung vermieden werden kann, falls ein Schaumstoff angewendet wird, deren spezifisches Gewicht (kg/m³) kleiner ist und der nicht antistatisiert wird, sondern die natürliche statische Eigenschaft des Stoffes ausnützend der antistatische bzw. antistatisch gemachte Überzug mit in regelmässige Form geschnittenen Stücken gefüllt wird. In dem gefüllten Überzug werden sich die Schaumstücke unregelmässig ordnen, doch wird die Stabilisierung der Lage der Stücke zueinander durch die antistatische Eigenschaft des Überzuges und die statische Eigenschaft der Schaumkörper gesichert, die eine regelmässige Form aufweisen, leichter sind als die herkömmlichen Schaumstücke und aus Polyurethan bestehen.

Es wurde erkannt, dass gegenüber den bisher Bekannten ein Polyurethanstoff von Polyäther-Typ mit sog. offenen Zellen angewendet werden soll, denn dadurch kann beim Waschen ein höherer Temperaturebereich angewendet werden. Ausserdem bietet der Stoff mit offenen Zellen und kleinerem spezifischem Gewicht ein weicheres Gefühl.

Schliesslich wurde erkannt, dass die Schimmelbildung und die Bildung von Bakterienkulturen in dem Stoff nur dadurch vermieden werden kann, wenn die Stücke antiseptisch gemacht werden.

Die Erfindung betrifft einen Gebrauchsartikel, wie z.B. Polster, Decken, Schutzbekleidung und dergleichen mit elastischer Füllung, welcher Gebrauchsartikel waschbar und antiseptisch ist, aus einem Überzug und darin befindlichen Schaumstücken aus Polyurethan besteht, und dessen Wesen darin besteht, dass der Überzug antistatisch ist, wobei die in diesem vorhandene Füllung aus in regelmässige Stücke geschnittenen doch unregelmässig geordneten, statische Eigenschaften aufweisenden Schaumstücke aus Polyurethan mit offenen Zellen besteht, das spezifische Gewicht der Schaumstücke maximum 20 kg/ m³ ist und ihr Material antiseptische Eigenschaften aufweist. Zweckmässig weisen die Schaumstücke geschnittene Oberflächen auf und sind sechsflächige Körper von etwa identischen Abmessung.

Vorteilhaft besteht der Überzug aus Baumwolle und/oder Kunstfaser, und ist entweder ursprünglich antistatisch oder ist antistatisch gemacht worden.

Vorteilhaft wird der antiseptische Schaumblock mit offenen Zellen zuerst in Platten gespalten, danach zweckmässig mit Hilfe von Dreh- und/oder Schwenkmessern in Stücke geschnitten und die auf diese Weise statisch gewordenen Stücke werden von den Messern mit Hilfe eines Luftstromes in den Überzug gefüllt.

Bei der Erfindung wurde davon ausgegangen, dass bei den erwähnten Gebrauchsartikeln das bessere Ordnen und ein weicheres Gefühl mit einem Stoff kleinen spezifischen Gewichtes gesichert werden kann. Deshalb wurde ein Stoff von maximum 20 kg/m³ gewählt. Gleichzeitig war das Ziel das Waschen des Artikels auf je höherer Temperatur zu ermöglichen. Beide Eigenschaften werden durch einen Schaumstoff mit offenen Zellen gesichert.

Die antiseptische (antibakteriale, fungizide) Wirkung des Schaumstoffes wird durch Beimischung eines Zusatzstoffes zu dem Polyol gesichert, der durch Hinderung der enzimatischen Abbildung der Bakterien und Schimmelpilze die Ausbildung des Nährbodens für Bakterien und Schimmelpilze hindert. Derartige Stoffe sind an sich bekannt und im Handelsverkehr zu bekommen, wie z.B. das sog. Santized. Von diesem Stoff wird ungefähr 0,4 - 1,6 Gewichtsprozent der Polyolkomponente des Polyurethans beigemischt und der derartig hergestellte Polyurethanschaum wird dadurch antiseptisch.

Der Polyurethanschaum ist ursprünglich nicht statisch. Während seiner Zerschneidung wird er aber auf natürlichem Wege statische. Eben diese entstehende statische Eigenschaft wird zur Sicherung der erforderlichen statischen Füllung ausgenützt.

Im Sinne des erfindungsgemässen Verfahrens wird derart vorgegangen, dass der mit antiseptischem Zusatzstoff hergestellte Schaumblock in an sich bekannter Weise zuerst in Platten gespalten wird, danach diese Platten mit einer geeigneten Schneidevorrichtung, z.B. mit einer mit Dreh- und/oder Schwenkmessern versehenen Vorrichtung in Längsrichtung und Querrichtung in sechsflächige Körper von nahezu identische Abmessungen z.B. 10 x 6 x 4 mm geschnitten werden. Inzwischen füllt sich der Stoff statisch auf. Die Schaumstücke werden von den Messern mit Hilfe eines Lufstromes in den Überzug gefüllt.

Der Überzug kann aus reiner Baumwolle, Baumwolle-Kunststoff-Mischung oder je nach der Gebrauchsweise z.B. bei Schutzbekleidung aus reinem Kunstfaser bestehen. Falls die Füllung wegen der Mischung, oder weil er aus reinem Kunstfaser besteht, statische Eingenschaftern aufweist, muss der Überzug in an sich bekannter Weise antistatisch gemacht werden. Zweckmässig soll der Überzug auch antiseptisch gemacht werden.

Die erfindungsgemässe Lösung ist zur Herstellung von Gebrauchsartikeln von verschiedener Form, insbesondere zur Herstellung von therapeutischen Hilfsmitteln, z.B. Polstern, Decken, antiseptischer Schutzbekleidung oder sogar von anderen Gegenständen, z.B. Kinderspielzeugen geeignet, die antiseptische Eigenschaften aufweisen, mit einer elastischen Füllung versehen und washbar sind.

Diese Artikel erwecken ein sehr weiches Gefühl und können neben ihrer antiseptischen Eigenschaft auf einer Temperatur von etwa 90 °C regelmässig gewaschen werden, ohne dass die Füllung eine Beschädigung erleidet.

Ein grosses Anwendungsgebiet bieten auch die Hotels und Institutionen, wo eine bakterienfreie Bettwäsche notwendig und günstig ist.

**Patentansprüche**

1. Gebrauchsartikel, beispielsweise Polster, Decken, Schutzbekleidung u. dgl., mit elastischer Füllung, welcher Gebrauchsartikel waschbar und antiseptisch ist und aus einem Überzug und darin befindlichen Schaumstücken aus Polyurethan als Füllungsmaterial mit antiseptischen Eigenschaften besteht, dadurch **gekennzeichnet**, daß der Überzug antistatisch ist, und das in diesem vorhandene Füllungsmaterial aus in regelmäßige Stücke geschnittenen, jedoch unregelmäßig geordneten, statische Eigenschaften aufweisenden, offenzelligen Schaumstücken mit einem spezifischen Gewicht von maximal 20 kg/m³ besteht.

2. Gebrauchsartikel nach Anspruch 1, dadurch **gekennzeichnet**, dass die Schaumstücke geschnittene Oberflächen aufweisen und sechsflächige Körper von etwa identischer Abmessung sind.

3. Gebrauchsartikel nach Anspruch 1 oder 2, dadurch **gekennzeichnet**, dass der Überzug aus Baumwolle und/oder Kunstfaser besteht und entweder ursprünglich antistatisch ist oder antistatisch gemacht worden ist,

4. Verfahren zur Herstellung des Gebrauchsartikels nach den Ansprüche 1 bis 3, wobei zur Herstellung des an sich bekannten Polyurethanschaumes der Polyolkomponente ein die enzymatische Abbildung hindernder Zusatzstoff beigemischt wird, dadurch **gekennzeichnet**, daß während der Herstellung der Polyolkomponente der Zusatzstoff in einer Menge von 0,4 bis 1,6 Gew.% beigemischt wird.

5. Verfahren nach Anspruch 4, dadurch **gekennzeichnet**, dass der antiseptische Schaumblock mit offenen Zellen zuerst in Platten gespalten wird, danach zweckmässig mit Hilfe von Dreh- und/oder Schwenkmessern in Stücke geschnitten wird und die auf diese Weise statisch gewordenen Stücke von den Messern mit Hilfe eines Luftstromes in den Überzug gefüllt werden.

## Claims

1. Article for use, for instance cushions, blankets, protective clothings and the like, provided with an elastic filling, which article can be washed and is antiseptical and consists of a cover and pieces of foam of polyurethane as filling material with antiseptical characteristics contained in said cover, **characterized** in that the cover is antistatic and that the filling material contained therein consists of regularly cut pieces of foam provided with open cells and having a specific weight of up to 20 kg/m³, which pieces, however, are arranged irregularly having static qualities.

2. Article of use according to claim 1, **characterized** in that pieces of foam are provided with cut surfaces and are bodies with six planes and having nearly identical dimensions.

3. Article of use according to claim 1 or 2, **characterized** in that the cover consists of cotton and/or artificial fibres and is either original antistatic or has been made antistatic.

4. Process of manufacture of the article of use according to the claims 1 - 3, wherein for the production of a polyurethane foam known per se of the polyole component an additive is admixed avoiding the enzymatic reaction, **characterized** in that during the production the additive is admixed to the polyole component in an amount of 0.4 to 1.6 weight %.

5. Process according to claim 4, **characterized** in that the antiseptic block of foam provided with open cells is at first cut into plates, afterwards advantageously cut into pieces by means of rotating and/or pivoting knives, whereafter the pieces having become static by that kind of operation are withdrawn from knives by means of an air stream filling them into the cover.

## Revendications

1. Article utilitaire, comme par exemple coussins, couvertures, vêtements de protection, etc., à rembourrage élastique, ledit article utilitaire étant lavable et antiseptique et se composant d'une housse et d'éléments alvéolaires en polyuréthane qui se trouvent à l'intérieur comme matière de rembourrage aux propriétés antiseptiques, **caractérisé** par le fait que la housse est antistatique et que la matière de rembourrage qu'elle contient se compose d'éléments à alvéoles ouvertes qui sont coupés en morceaux réguliers, mais répartis de façon irrégulière, lesdits morceaux ayant des propriétés statiques et un poids volumique maximum de 20 kg/m³.

2. Article utilitaire selon la revendication 1, **caractérisé** par le fait que les éléments alvéolaires présentent une surface coupée et constituent des hexaèdres de dimension approximativement identique.

3. Article utilitaire selon l'une des revendications 1 ou 2, **caractérisé** par le fait que la housse est en coton et/ou en fibre synthétique et qu'elle est antistatique dès l'origine ou qu'on l'a rendue antistatique.

4. Procédé de fabrication dudit article utilitaire d'après les revendications 1 à 3, selon lequel, lors de la fabrication de la mousse de polyuréthane qui, elle, est déjà connue, on mélange au composant polyol un additif qui arrête la reproduction enzymatique, **caractérisé** par le fait que l'on mélange ledit additif lors de la fabrication du composant polyol dans une proportion de 0,4 à 1,6 % pondéral.

5. Procédé selon la revendication 4, **caractérisé** par le fait que le bloc de mousse antiseptique à alvéoles ouvertes commence par être divisé en feuilles, puis est coupé en morceaux à l'aide de couteaux adéquats tournants et/ou pivotants et que les morceaux, qui sont ainsi devenus statiques, sont introduits dans la housse par les couteaux à l'aide d'un jet d'air.